(19) Europäisches Patentamt
European Patent Office
Office européen des brevets

(11) Publication number: 0 212 698 B1

(12) EUROPEAN PATENT SPECIFICATION

(45) Date of publication of the patent specification: 28.03.90

(51) Int. Cl.⁴: G11B 17/032, G11B 19/20

(21) Application number: 86201159.0

(22) Date of filing: 02.07.86

# (54) Apparatus for recording and/or reading information on/from a rotating information disc.

(30) Priority: 17.07.85 NL 8502057

(43) Date of publication of application: 04.03.87 Bulletin 87/10

(45) Publication of the grant of the patent: 28.03.90 Bulletin 90/13

(84) Designated Contracting States: CH DE FR GB IT LI NL

(56) References cited:
EP-A- 0 070 557
WO-A-84/03989
GB-A- 2 132 807

PATENTS ABSTRACTS OF JAPAN, vol. 8, no. 51 (P-259)[1488], 8th March 1984; & JP-A-58 200 479 (MATSUSHITA DENKI SANGYO K.K.) 22-11-1983
PATENTS ABSTRACTS OF JAPAN, vol. 8, no. 48 (P-258)[1485], 3rd March 1984; & JP-A-58 199 481 (TEAC K.K.) 19-11-1983
PATENTS ABSTRACTS OF JAPAN, vol. 9, no. 37 (P-335)[1760], 16th February 1985; & JP-A-59 177 764 (YOSHITERU TAKAHASHI) 08-10-1984

(73) Proprietor: N.V. Philips' Gloeilampenfabrieken, Groenewoudseweg 1, NL-5621 BA Eindhoven(NL)

(72) Inventor: Zeeman, Leendert, c/o INT. OCTROOIBUREAU B.V. Prof. Holstlaan 6, NL-5656 AA Eindhoven(NL)

(74) Representative: Schrijnemaekers, Hubert Joannes Maria et al, Internationaal Octrooibureau B.V. Prof. Holstlaan 6, NL-5656 AA Eindhoven(NL)

EP 0 212 698 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to an apparatus for recording and/or reading information on/from a rotating information disc, comprising a deck plate, a turntable which is rotatably supported on the deck plate and comprises a supporting surface for the information disc, a centring member for centring the information disc on the turntable relative to the axis of rotation of the turntable, a clamping device for clamping the information disc onto the turntable, which device comprises a disc-pressure means and a support therefor which is movable between an operative position and a rest position, the disc-pressure means, in the operative position of the support, being pressed against the information disc on the turntable and being rotatable relative to the support, and the latter, as it moves from the operative position to the rest position, cooperating with the disc-pressure means to move said means away from the information disc and thereby release the information disc, and the disc-pressure means being carried by the support when the latter is in its rest position, and an electric drive unit comprising a stator section and a rotor section for rotating the disc, which is supported by the turntable, in the operative position of the support.

Such an apparatus is known from Netherlands Patent Application 8202163 (EP-A 95 800). In the apparatus described in said Patent Application, which is an optical-disc apparatus, the turntable is mounted on a spindle of a drive motor, which spindle is rotatable about the axis of rotation of the turntable. The drive motor, which is supported in the deck plate, is situated underneath the turntable. On the same side of the turntable there is arranged a focusing device comprising an objective by means of which a radiation beam produced by a laser source can be focused on the lower surface of an optical disc placed on the turntable and by means of which the beam reflected by the disc is diverted towards photoelectric information-detection means of the apparatus. In order to enable the entire information surface of the disc to be scanned, which surface extends between a circle of small radius and a circle of larger radius, the objective is mounted so as to be radially movable inside the apparatus. However, this means that in a radial direction the space available for the drive motor is limited and is dictated by the required radial freedom of the objective. Therefore, the drive motor of the known apparatus is required to have a comparatively large axial dimension in order to be able to produce the motor power and motor torque necessary for driving the turntable, with the result that the height of the apparatus is comparatively large.

Currently, there is a distinct trend to minimize the height of apparatuses of the kind to which the invention relates. One explanation for this trend resides in current design concepts for audio and video equipment and another explanation for the trend is the need for small portable equipment and equipment suitable for mounting in, for example, cars. However, if the height is reduced this also means that the axial length of the drive motor must be reduced. Since the diameter of the drive motor cannot be increased for the aforementioned reason, problems may arise in respect of maintaining the required motor specifications, in particular as regards the motor power and motor torque. This may necessitate additional steps such as the use of high-grade magnetic materials in the motor, which renders the motor more expensive, or reducing the axial length of the motor only to a limited extent.

The invention aims at modifying an apparatus of the type defined in the opening paragraph in such a way that its height can be reduced in a cheap and simple but effective manner.

To this end the invention is characterized in that the electric drive unit is mounted in the clamping device, the stator section of the drive unit being secured to the support and the rotor section to the disc pressure means, and the rotor section is rotatable about the axis of rotation of the turntable in the operative position of the support.

This arrangement of the drive unit enables the diameter of the drive unit to be increased substantially, so that only a small axial dimension of the drive unit is required in order to obtain the desired motor specification. Since, in effect, the drive unit is integrated in the clamping device the additional height occupied by the drive unit is small in comparison with the height that is occupied anyway by the clamping device. Therefore, the invention has the advantage that by the use of the electric drive unit a surprisingly small height of the apparatus can be obtained.

It is to be noted that the radial dimensions of the drive unit can be increased substantially without influencing the height of the apparatus. Such an increase in radial dimension may be desirable, for example, if a drive motor with a higher performance is required. Another advantage of the apparatus in accordance with the invention is that more space is available beneath the turntable for accommodating other elements of the apparatus.

A preferred embodiment of the invention is characterized in that the stator section and the rotor section are each of flat annular form, the two sections being arranged opposite each other so as to form a narrow air gap between them, and the clamping device is provided with ferromagnetic means for closing the magnetic flux circuit of the electric drive unit.

In this way a very flat drive unit and consequently an apparatus with a minimal height can be obtained. An embodiment which is easy to realize in this respect is characterized in that the stator section comprises a set of coils arranged in a ring and the rotor section comprises an axially magnetized, multi-pole, flat annular permanent magnet, the magnet being arranged on a rotor closing plate of a ferromagnetic material.

Another preferred embodiment is characterized in that on its side which faces the disc-pressure means the support is provided with an actuating member for moving the disc-pressure means and the rotor section of the drive unit away from the information disc on the turntable during the movement of the support from the operative position to the rest position.

In the operative position of the support the disc-pressure means and the rotor section of the drive unit are not in contact with the actuating member of the support and can thus rotate freely relative to the actuating member. In this respect a very favourable embodiment is characterized in that in the rest position of the support the magnetic means press the disc-pressure means and the rotor section of the electric drive unit against the actuating member of the support.

This step ensures that as the support moves between the operative position and the rest position the rotor section of the drive unit is magnetically urged into a fixed position relative to the stator section of this drive unit, so that no movements of the two sections of the drive unit relative to each other are possible in the rest position of the support. The support can be actuated manually or automatically and may be translatable or pivotable.

Embodiments of the invention will now be described in more detail, by way of example, with reference to the accompanying drawings, in which

Fig. 1 is a perspective view of an apparatus in accordance with the invention in the form of an audio-disc player having a cover provided with a clamping device,

Fig. 2 is an axial sectional view of a part of the clamping device in the first embodiment of the invention shown in Fig. 1,

Fig. 3 is a sectional view similar to that of Fig. 2 illustrating a second embodiment of the invention,

Fig. 4 is a scaled-down sectional view taken on the lines IV-IV in Fig. 3, and

Fig. 5 is a scaled-down sectional view taken on the lines V-V in Fig. 4.

The disc-record player shown in Fig. 1 comprises deck plate 1 around which extends a housing 3 and over which extends a hinged cover which constitutes a support 5 for a disc-pressure means, as will be hereinafter described. For the actuation of the various functions of the record player a number of keys 7 and slide controls 9 are arranged on the front side of the housing 3. The deck plate 1 carries a turntable 11 which is rotatable about an axis of rotation 10 and which comprises a supporting surface 11a and a centring mandril 13. The deck plate 1 further carries a focusing device 15 which is provided with an objective 15a at its upper side. By means of a drive mechanism, not shown, the focusing device is movable relative to the turntable 11 along a curved path in a curved slot 17 in the deck plate 1. In addition to the objective 15a the focusing device 15 comprises a laser unit, not shown, which during operation emits a sharply defined radiation beam which is projected onto an optical disc 19 then situated on the surface 11a of the turntable 11. In the present embodiment the disc 19 is an information-carrier for audio signals and has the property that it reflects the radiation beam emitted by the focusing device 15. In the apparatus the reflected beam is received by appropriate opto-electronic means and is converted into signals which are transmitted to further parts of the player. As the construction and operation of the focusing device 15, the electronic means and said further parts are irrelevant to the present invention, these elements will not be described in more detail. For this reference is made to European Patent Application 0070070 (herewith incorporated by reference), which discloses an opto-electronic device which may be used in an apparatus in accordance with the invention.

The support 5, which is pivotally connected to the housing 3, forms part of a clamping device 21 for clamping the disc 19 on the turntable 11. The clamping device 21 will be described in more detail with reference to Fig. 2 and Figs. 3 to 5.

Fig. 2 shows a first example of the clamping device 21, comprising said support 5 and a plastics disc-pressure means 23. The support 5 is movable between a rest position, shown in Fig. 1, and an operating position, shown in Fig. 2. In the operating position of the support 5 the disc-pressure means 23, which is connected to the support 5 in a manner to be described hereinafter, is pressed against the disc 19 on the surface 11a of the turntable 11. An external centring surface 13a of the centring mandril 13 ensures that the disc 19 is and remains positioned correctly relative to the axis of rotation 10. The disc-pressure means 23 can also be positioned relative to the axis of rotation by means of centring projections 25 which are integral with the disc-pressure means and which cooperate with an internal centring surface 13b of the centring mandril 13. At the side facing the disc 19 the disc-pressure means 23 comprises a rubber ring 27 with which the disc-pressure means contacts the disc 19.

The clamping device 21 further comprises an electric drive unit 31 comprising a rotor section 33 and stator section 35. The rotor section 33 comprises a multipole, axially magnetized, flat angular magnet which is arranged on a rotor closing plate 37 made of a ferromagnetic material such as soft iron. The rotor closing plate 37 carrying the magnet is embedded in the disc-pressure means 23. The stator section 35 comprises a plurality of flat coils which are secured to the support 5 and which are arranged in a ring, so that the stator section has a flat annular form. Between the rotor section 33 and the stator section 35 a narrow air gap 38 is formed, the angular magnet and the ring of coils being arranged opposite one another. In order to close the magnetic circuit in the drive unit 31 the support 5 should be made of a ferromagnetic material or should be provided with a magnetizable part at the location of the coils.

In the position shown in Fig. 2, which is the operative position of the support 5, the axis of rotation of the rotor section 33 of the drive unit 31 coincides with the axis of rotation 10 of the turntable 11. In this situation the rotor section 33 has contact with the support 5 through a thrust bearing 41, which allows the rotor section to rotate freely relative to the support 5. The bearing 41 comprises a rotatable part on the disc-pressure means 23 and a stationary part on the support 5. The pressure required for clamping the disc 19 on the turntable 11 can be transmitted from the support 5 to the pressure means 23 via the bearing 41. This force is such that an adequate friction is obtained between the rubber ring 27 and the disc 10 to transmit the rotation of the disc-pressure means 23, which is driven by the electric drive unit 31, to the optical disc 19 without slipping.

The support 5 further comprises an annular actuating member 43 which serves for supporting the rotor section 33 of the drive unit 31 and, consequently, the disc-pressure means 23 connected thereto in the rest position of the support 5 and in intermediate positions between the operative position and the rest position of the support 5. For this purpose the actuating member 43 is provided with an inwardly directed flange 45 on which the rotor closing plate 37 can rest.

The turntable 11 is rotatably supported on the deck plate 1 by means of an spiral-groove axial bearing 47 and a sleeve-type radial bearing 49. The spiral-groove bearing 47 is constituted by the lower surface of the turntable 11 and a bearing disc 51 which is secured to the deck plate. The bearing 49 comprises a bearing sleeve 53 mounted in the turntable 11 and a stationary spindle 55 which is fixed in the deck plate.

A second embodiment will now be described with reference to Figs. 3 to 5. Since this embodiment differs from the preceding embodiment only with respect to some details, a number of the previously described parts of the device will not be described again. Further, the same reference numerals will be used whenever possible.

The second embodiment is also shown in the operative position of the support, in which the optical disc 19 is clamped on the turntable 11 by the disc-pressure means 23. Again the electric drive unit 31 comprises a rotor section 33, secured to the disc-pressure means, and a stator section 35, secured to the support 5. In the present embodiment the rotor section 33 comprises a flat annular magnet 33a which is axially magnetized in such a way that the magnet surface 33b facing the stator section 35 exhibits eight magnetic poles which are spaced equidistantly around the magnet, adjacent poles always having opposite polarities - north N or south S (see Fig. 4). The stator section 35, which is situated opposite the rotor section 33, comprises a ring of coils 35a which cooperates magnetically with the magnet 33a. The coil ring 35a comprises sixteen coils in total and is formed by two superimposed sets of eight flat coils 35b each (see Fig. 5).

By means of a suitable motor control the rotor section 33 with the disc-pressure means 23 connected thereto can be rotated by energizing the drive unit 31, to drive the optical disc 19 in the operative position of the support 5. This embodiment is constructed in such a way that in this operative position the disc-pressure means 23 is freely rotatable relative to the support 5 and is pressed against the disc 19 by a magnetic pressing force. For this purpose the clamping device 21 is provided with two annular magnets 57 and 59 which face each other, the magnet 57 being glued to the disc-pressure means 23 and the other magnet 59 being secured to the support 5 in a similar way. The magnets 57 and 59 are axially magnetized and face each other with like poles, in the present case the north-pole side, as will be apparent from Figs. 4 and 5 in which the magnetic north-pole side is indicated by the letter N. Thus, a repelling magnetic force is obtained between the support 5 and the disc-pressure means 23, which provides the aforementioned pressing force in the operative position of the support 5 and which clamps the rotor closing plate 37 of the rotor section 33 of the drive unit 31 against the flange 45 of the actuating member 43 of the support 5 in the rest position of the support 5, so that the two sections 33 and 35 are maintained in a fixed position relative to one another.

It is obvious that the scope of the invention is not limited to the embodiments described herein. For example, it is alternatively possible to provide the rotor section of the electric drive unit with coils and to provide the stator section with permanent magnets. Moreover, the invention may be employed in disc-record players of another type than that described herein. For example, the support need not necessarily be constituted by the cover of the player.

## Claims

1. An apparatus for recording and/or reading information on/from a rotating information disc, comprising a deck-plate (1), a turntable (11) which is rotatably supported on the deck plate and comprises a supporting surface for the information disc, a centring member (13) for centring the information disc (19) on the turntable relative to the axis of rotation of the turntable, a clamping device (21) for clamping the information disc onto the turntable, which device comprises a disc-pressure means (23) and a support (5) therefore which is movable between an operative position and a rest position, the disc-pressure means, in the operative position of the support, being pressed against the information disc on the turntable and being rotatable relative to the support, and the latter, as it moves from the operative position onto the rest position cooperating with the disc-pressure means to move said means away from the information disc and thereby release the information disc, and the disc-pressure means being carried by the support when the latter is in its rest position, and an electric drive unit comprising a stator section and a rotor section for rotating the disc, which is supported by the turntable, in the operative position of the support, characterized in that the electric drive unit (31) is mounted in the clamping device (21), the stator section (35) of the drive unit being secured to the support (5) and the rotor section (33) to the disc-pressure means (23), and the rotor section is rotatable about the axis of rotation of the turntable in the operative position of the support.

2. An apparatus as claimed in claim 1, characterized in that the stator section and the rotor section are each of flat annular form, the two sections being arranged opposite each other so as to form a narrow air gap between them, and the clamping device is provided with ferromagnetic means for closing the magnetic flux circuit of the electric drive unit.

3. An apparatus as claimed in Claim 2, characterized in that the stator section comprises a set of coils arranged in a ring and the rotor section comprises an axially magnetized, multi-pole, flat annular permanent magnet, the magnet being arranged on a rotor closing plate of a ferromagnetic material.

4. An apparatus as claimed in Claim 1, 2 or 3, characterized in that on its side which faces the disc-pressure means the support is provided with an actuating member (43) for moving the disc-pressure means and the rotor section of the drive unit away from the information disc on the turntable during the movement of the support from the operative position to the rest position.

5. An apparatus as claimed in Claim 4, the clamping device comprising permanent-magnetic means (57, 59) which exert a magnetic force between the support and the disc-pressure means, characterized in that in the rest position of the support the magnetic means press the disc-pressure means and the rotor section of the electric drive unit against the actuating member of the support.

## Patentansprüche

1. Gerät zum Aufnehmen und/oder Auslesen von Information auf/von einer sich drehenden Informationsplatte, mit einem Gestell (1), einem in dem Gestell drehbar gelagerten Plattenteller (11) mit einer Auflegefläche für die Informationsplatte, einem Zentrierelement (13) zum Zentrieren der Informationsplatte (19) auf dem Plattenteller gegenüber der Drehungsachse desselben, einer Klemmvorrichtung (21) zum Festklemmen der Informationsplatte auf dem Plattenteller, wobei diese Vorrichtung einen Plattendrücker (23) sowie einen zwischen einer Betriebslage und einer Ruhelage beweglichen Träger aufweist, wobei der Plattendrücker in der Betriebslage des Trägers gegen die Informationsplatte auf dem Plattenteller gedrückt und gegenüber dem Träger drehbar ist und wobei letzterer in seiner Bewegung aus der Betriebslage in die Ruhelage mit dem Plattendrücker zusammenarbeitet um denselben von der Informationsplatte zu entfernen und die Informationsplatte freizugeben, und wobei der Träger in seiner Ruhelage den Plattendrücker trägt, und mit einer elektrischen Antriebseinheit mit einem Ständerteil und einem Läuferteil zum Drehen der auf dem Plattenteller liegenden Platte in der Betriebslage des Trägers, dadurch gekennzeichnet, daß die elektrische Antriebseinheit (31) in der Klemmvorrichtung (21) angeordnet ist, wobei der Ständerteil (35) der Antriebseinheit an dem Träger (5) und der Läuferteil (33) an dem Plattendrücker (23) befestigt ist und wobei in der Betriebslage des Trägers der Läuferteil um die Drehungsachse des Plattentellers drehbar ist.

2. Gerät nach Anspruch 1, dadurch gekennzeichnet, daß der Ständerteil und der Läuferteil je eine flache Ringform aufweisen, wobei diese zwei Teile zum Bilden eines engen Luftspaltes zwischen denselben einander gegenüber angeordnet sind und, wobei die Klemmvorrichtung mit ferromagnetischen Mitteln zum Schließen des Magnetflußkreises der elektrischen Antriebseinheit versehen ist.

3. Gerät nach Anspruch 2, dadurch gekennzeichnet, daß der Ständerteil einen ringförmig angeordneten Spulensatz aufweist und der Läuferteil einen axial magnetisierten, flachen ringförmigen Mehrpoldauermagneten aufweist, wobei der Magnet auf einer Läuferschließplatte auf ferromagnetischem Werkstoff angeordnet ist.

4. Gerät nach Anspruch 1, 2 oder 3, dadurch gekennzeichnet, daß der Träger auf der dem Plattendrücker zugewandten Seite mit einem Betätigungselement (43) versehen ist, um den Plattendrücker und den Läuferteil der Antriebseinheit während der Bewegung des Trägers aus der Betriebslage in die Ruhelage von der Informationsplatte auf dem Plattenteller zu entfernen.

5. Gerät nach Anspruch 4, wobei die Klemmvorrichtung Dauermagnetmittel (57, 59) aufweist, die zwischen dem Träger und dem Plattendrücker eine Magnetkraft ausüben, dadurch gekennzeichnet, daß die Magnetmittel in der Ruhelage des Trägers den Plattendrücker und den Läuferteil der elektrischen Antriebseinheit gegen das Betätigungselement des Trägers drücken.

## Revendications

1. Appareil d'enregistrement et/ou de lecture d'information sur un disque d'information rotatif, comportant une platine (1), un plateau tournant (11) supporté à rotation par la platine et muni d'une surface de support pour le disque d'information, un élément de centrage (13) pour centrer le disque d'information (19) sur le plateau tournant par rapport à l'axe de rotation de ce plateau tournant, un dispositif de serrage (21) pour serrer le disque d'information sur le plateau tournant et constitué d'un presse-disque (23) et d'un support (5) pour celui-ci, qui peut être déplacé entre une position de fonctionnement et une position de repos, presse-disque qui, dans la position de fonctionnement du support, est pressé contre le disque d'information sur le plateau tournant et peut tourner par rapport au support, ce dernier étant prévu, lors de son déplacement à partir de la position de fonctionnement vers la position de repos, pour coopérer avec le presse-disque de façon à écarter celui-ci du disque d'information et à libérer ainsi le disque d'information, et le presse-disque étant supporté par le support lorsque ce dernier est dans sa position de repos, et une unité d'entraînement électrique comportant une partie statorique et une partie rotorique pour tourner, dans la position de fonctionnement du support, le disque supporté par le plateau tournant, caractérisé en ce que l'unité d'entraînement électrique (31) est montée dans le dispositif de serrage (21), la partie statorique (35) de l'unité d'entraînement étant fixée au support (5) et la partie rotorique (33) étant fixée au presse-disque (23), et en ce que la partie rotorique peut tourner autour de l'axe de rotation du plateau tournant dans la position de fonctionnement du support.

2. Appareil selon la revendication 1, caractérisé en ce que la partie statorique et la partie rotorique présentent chacune une forme annulaire plate, les deux parties étant disposées face à face tout en étant séparées par un entrefer étroit, et en ce que le dispositif de serrage est muni de moyens ferromagnétiques pour fermer le circuit du flux magnétique de l'unité d'entraînement électrique.

3. Appareil selon la revendication 2, caractérisé en ce que la partie statorique comporte un jeu de bobines disposées suivant un cercle et en ce que la partie rotorique comporte un aimant permanent annulaire plat multipolaire à aimantation axiale, l'aimant étant disposé sur une plaque de fermeture de rotor en matériau ferromagnétique.

4. Appareil selon la revendication 1, 2 ou 3, caractérisé en ce que, sur sa face située en regard du presse-disque, le support est muni d'un élément d'actionnement (43) servant, pendant le mouvement du support à partir de la position de fonctionnement vers la position de repos, à écarter du disque d'information situé sur le plateau tournant le presse-disque et la partie rotorique de l'unité d'entraînement.

5. Appareil selon la revendication 3, le dispositif de serrage comportant des moyens magnétiques permanents (57, 59) exerçant une force magnétique entre le support et le presse-disque, caractérisé en ce que, dans la position de repos du support, les moyens magnétiques serrent le presse-disque et la partie rotorique de l'unité d'entraînement électrique contre l'élément d'actionnement du support.

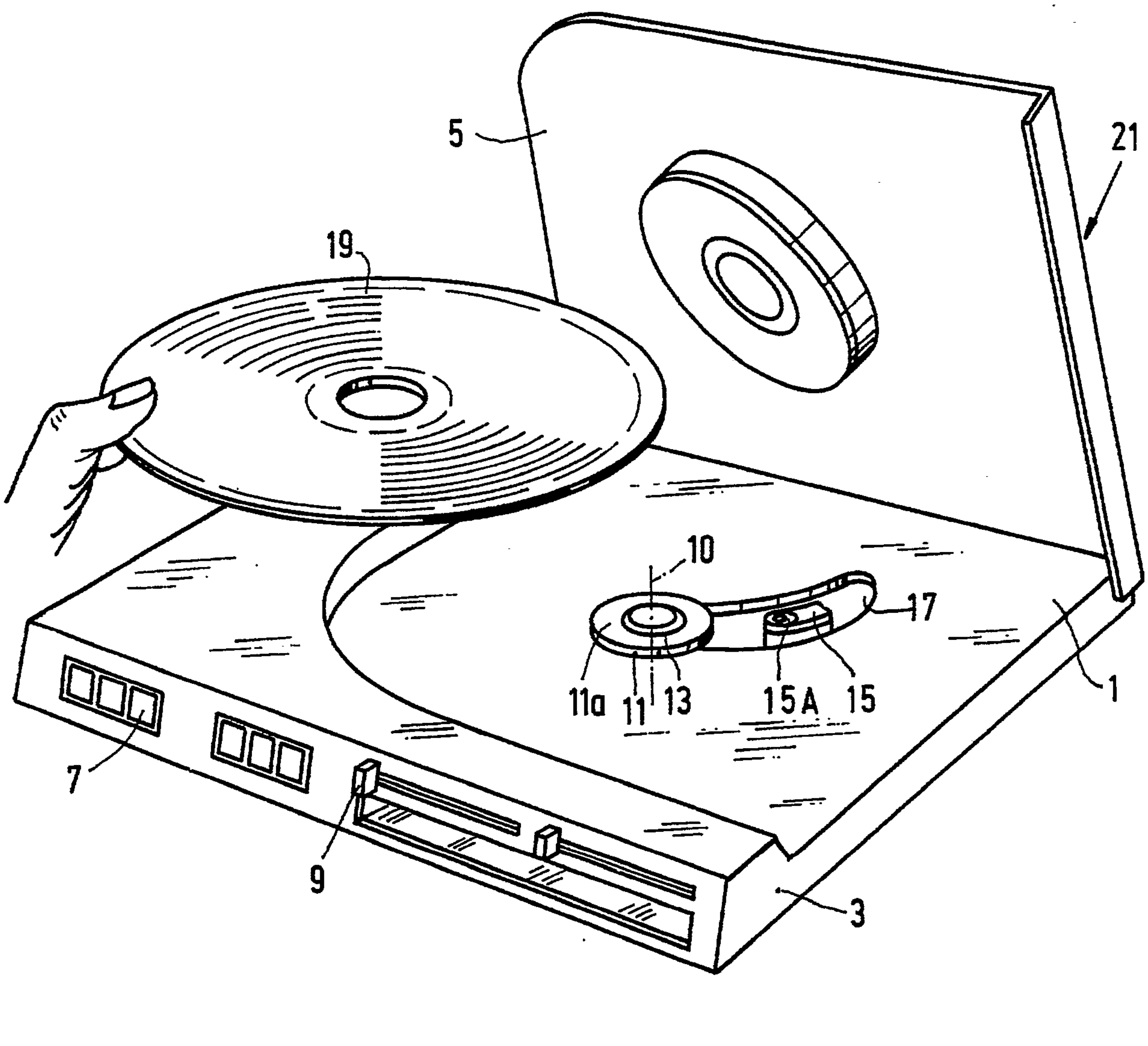


FIG. 1

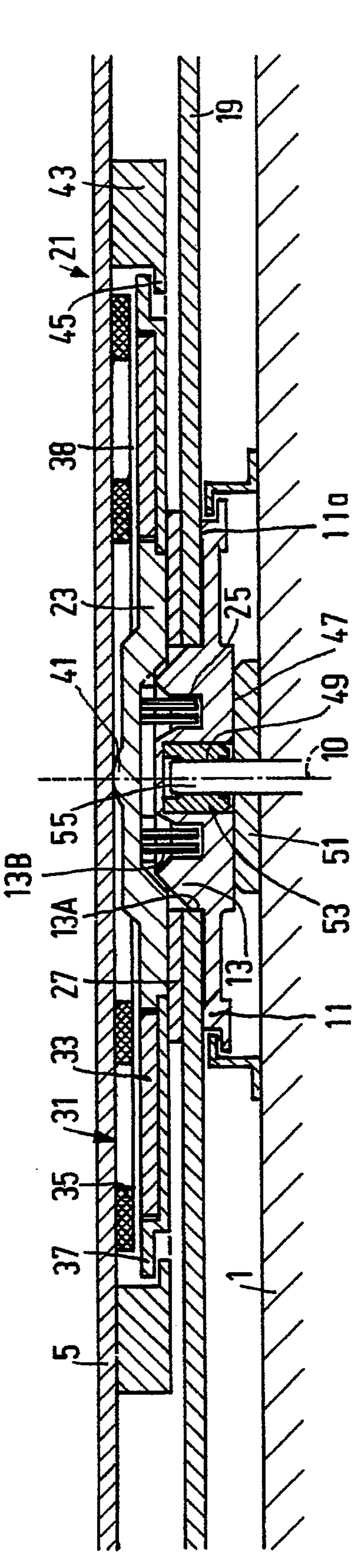
19
43
21
45
38
11a
23
25
47
41
49
10
55
13B
51
53
13A
13
27
11
33
31
35
37
1
5

FIG.2

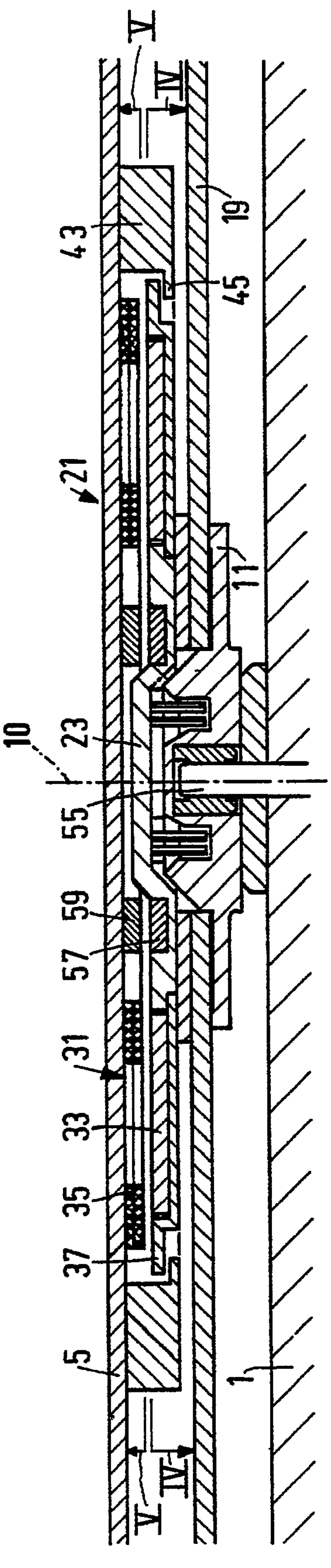
V
IV
19
43
45
21
11
10
23
55
59
57
31
33
35
37
5
1

FIG.3

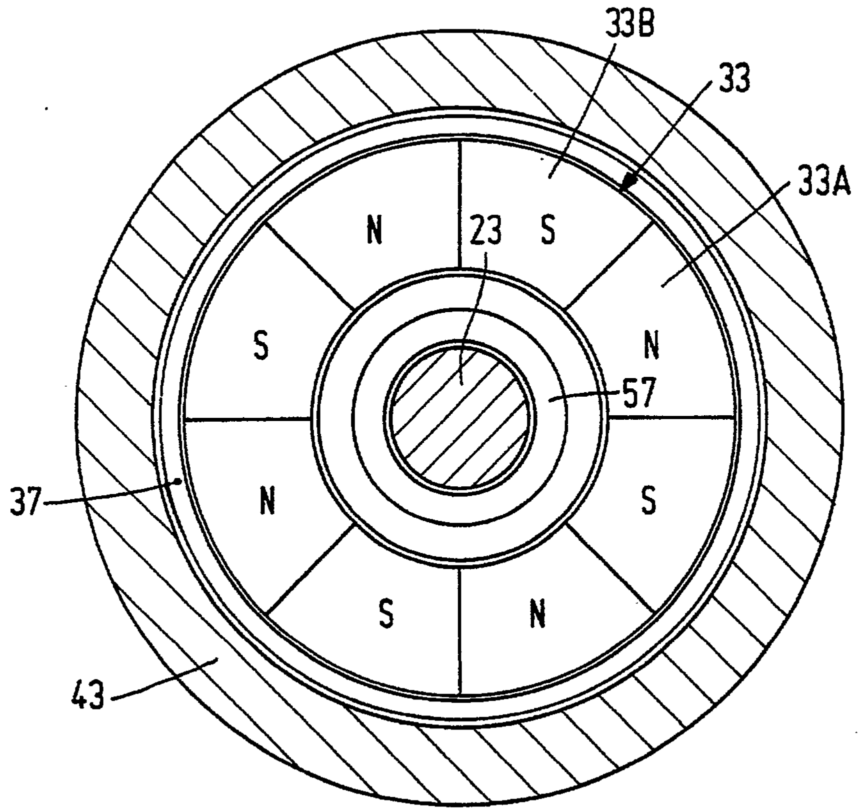


FIG.4

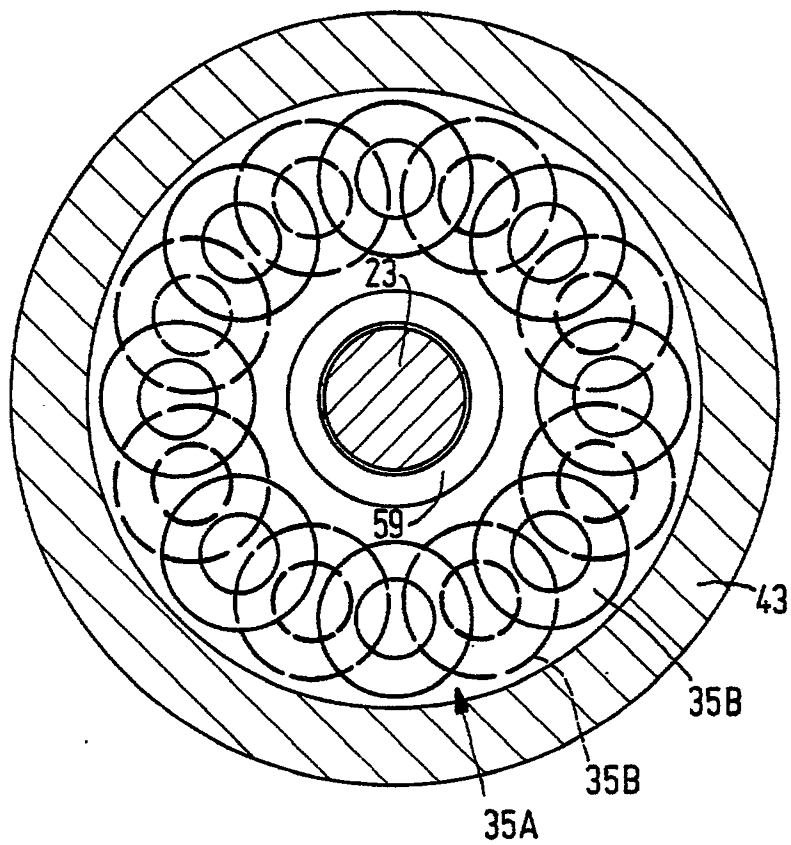


FIG.5